# EUROPEAN PATENT APPLICATION

(11) **EP 1 850 407 A1**
(43) Date of publication of application: **31.10.2007**
(21) Application number: 06714060.8
(22) Date of filing: 14.02.2006
(51) Int. Cl.: H01M 2/10, B60L 11/18

(54) **BATTERY PACK AND AUTOMOBILE**

(30) Priority: 16.02.2005 JP 2005039544
(71) Applicant: TOYOTA JIDOSHA KABUSHIKI KAISHA, Toyota-shi, Aichi-ken, 471-8571 (JP)
(72) Inventor: WATANABE, Ko, , Toyota-shi, Aichi, 4718571 (JP); NAGASE, Syuji, , Toyota-shi, Aichi, 4718571 (JP)
(74) Representative: TBK-Patent
(86) International application number: PCT/JP2006/302919
(87) International publication number: WO 2006/088172

(57) **Abstract**

In the battery pack, a battery module cover (101A) is fixed to a lower case (102) using a security bolt (break-head bolt) (212) in an undetachable manner in order to prevent charge and discharge with respect to a battery module (203) which is a secondary battery from/to an external source. An auxiliary component cover (101B) is fixed to the lower case (102) by an ordinary bolt (131) and a nut (141) in order to allow an electronic component within an auxiliary component (110) to be replaced. By this configuration, there are provided a battery pack having a structure which allows the auxiliary component to be serviced while ensuring safety during transportation in the case where the battery pack is to be serviced, and a motor vehicle incorporating the battery pack.

## Description

### Technical Field

The present invention relates to a battery pack and a motor vehicle, and more particularly to a structure of a battery pack incorporated in a motor vehicle such as an electric vehicle using an electric motor as a drive source.

### Background Art

Recently, an electric vehicle using an electric motor as a drive source, and a so-called hybrid vehicle having a plurality of types of drive sources such as an electric motor and a gasoline engine have been in practical use. Such an electric vehicle is provided with a battery for supplying electricity as energy to the electric motor and the like. This battery includes a secondary battery capable of being charged and discharged repeatedly, such as a nicad (Ni-Cd) battery, a nickel-hydride battery, a lithium-ion battery.

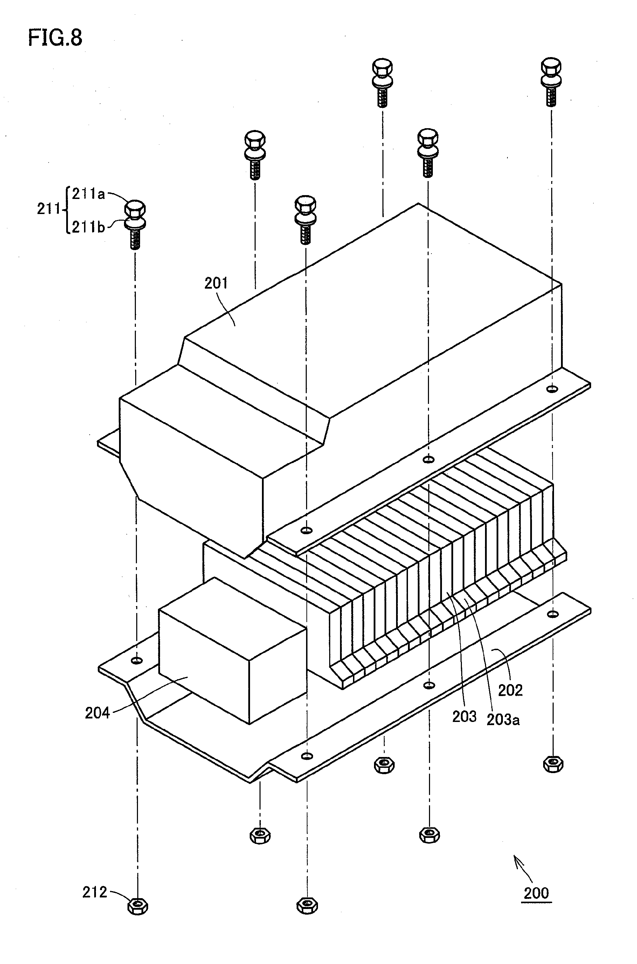

The schematic structure of a battery pack 200 including the above-described secondary battery is shown in Fig. 8. A battery module 203 with a plurality of battery cells 203 a laminated, and an auxiliary component 204 including a main system relay and an electronic component are accommodated in a battery case (wiring is not shown). The battery case has a lower case 202 which supports battery module 203 and auxiliary component 204, and an upper case 201 which covers battery module 203 and auxiliary component 204.

In the case where a secondary battery such as a lithium-ion battery capable of being charged and discharged is used, it is necessary to ensure safety during transportation by preventing ease of access to the internal secondary battery by a third person. Thus, in the above-described battery pack 200, in order to prevent upper case 201 from being removed from lower case 202 after upper case 201 is fixed to lower case 202, a fastening bolt designed to disable loosening is used when fixing upper case 201 to lower case 202.

By way of example, a security bolt (break-head bolt) 211 shown in the drawing is used. This security bolt 211 has a hex head 211a and a bolt body 211b, and is configured in such a way that, as with a normal hex bolt, hex head 211a is twisted and cut off from bolt body 211b when a force exceeding a certain level is exerted on hex head 211 a after fastening by means of a nut 212.

In the case where failure occurs in battery pack 200, mostly originating from auxiliary component 204 except for age deterioration reasons of battery module 203, repair can be implemented readily and economically by just replacing auxiliary component 204. The above-described structure, however, does not allow auxiliary component 204 to be replaced, and entire battery pack 200 needs to be replaced. This raises the cost that the user has to pay.

Although Japan Institute of Invention and Innovation Technical Report No. 2003-505824 discloses an attachment structure of the main system relay applied to the battery pack of a hybrid vehicle, it does not disclose the issue concerning safety during transportation and the task of having to replace entire battery pack 200 when the above-described battery pack 200 is to be serviced.

### Disclosure of the Invention

The problem to be solved by the present invention lies in that the entire battery pack must be replaced when the battery pack using a secondary battery capable of being charged and discharged, such as a lithium-ion battery and the like, is to be serviced. An object of the present invention is, therefore, to provide a battery pack having a structure which allows an auxiliary component to be serviced while ensuring safety during transportation in the case where the battery pack is to be serviced, and a motor vehicle incorporating the battery pack.

The present invention is based on a battery pack and a motor vehicle incorporating this battery pack. The battery pack has a battery module formed of a group of a plurality of battery cells and an auxiliary component accommodated in a battery case. The battery case of the battery pack includes a lower case supporting the battery module and the auxiliary component, a battery module cover covering the battery module, and an auxiliary component cover covering the auxiliary component. The battery module cover is fixed to the lower case in an undetachable manner, and the auxiliary component cover is fixed to the lower case in a detachable manner.

According to the battery pack constituted as described above and the motor vehicle incorporating this battery pack, it is possible to remove only the auxiliary component cover and examine the auxiliary component when failure occurs in the battery pack. In the case where failure occurs only in the auxiliary component which can be readily serviced by replacing the component, it is possible to service only the auxiliary component economically, readily and immediately, and to continue using the battery module. If failure occurs in the battery module, the entire battery pack should be replaced. Thus, appropriate measures can be taken depending on the state of the failure in the battery pack. Since the battery module is covered by the undetachable battery module cover, safety during transportation is ensured.

### Brief Description of the Drawings

Fig. 1 is a schematic cross-sectional view showing the form of a motor vehicle incorporating a battery pack according to an embodiment of the present invention.
Fig. 2 is a schematic plan perspective view of the motor vehicle shown in Fig. 1.
Fig. 3 is a block diagram illustrating the control relating to the battery pack of the motor vehicle shown in Fig. 1.
Fig. 4 is an overall exploded perspective view of the battery pack according to the embodiment of the present invention.
Fig. 5 is a schematic cross-sectional view along the line V-V in Fig. 4.
Fig. 6 is an overall perspective view of the battery pack according to another embodiment of the present invention.
Fig. 7 is an overall perspective view of the structure of an interlock clip.
Fig. 8 is an overall exploded perspective view of the battery pack in the background art on which the present invention is based.

### Best Modes for Carrying Out the Invention

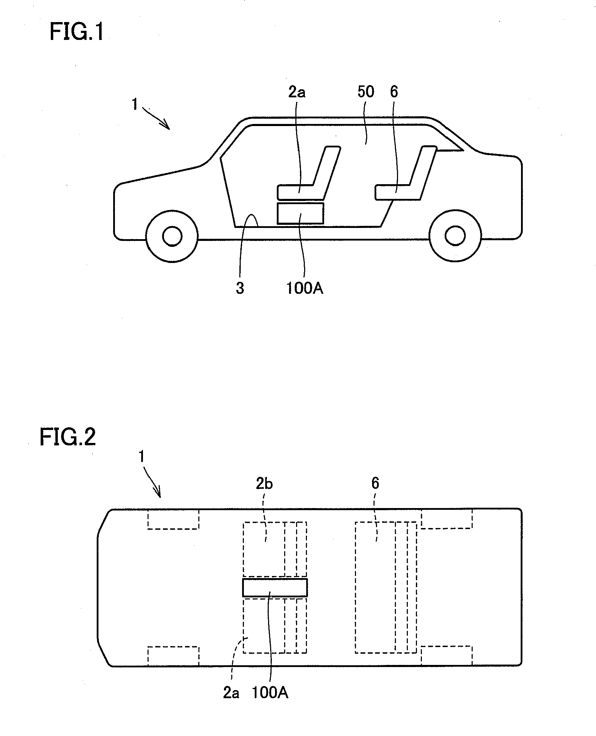

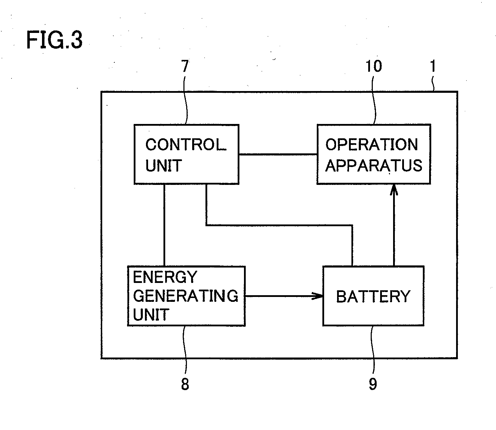

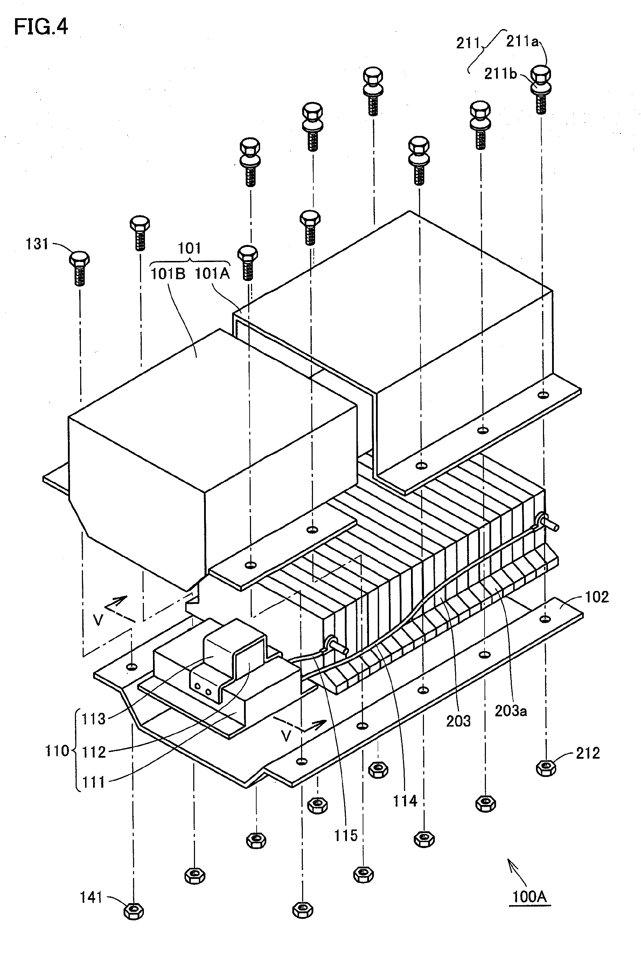

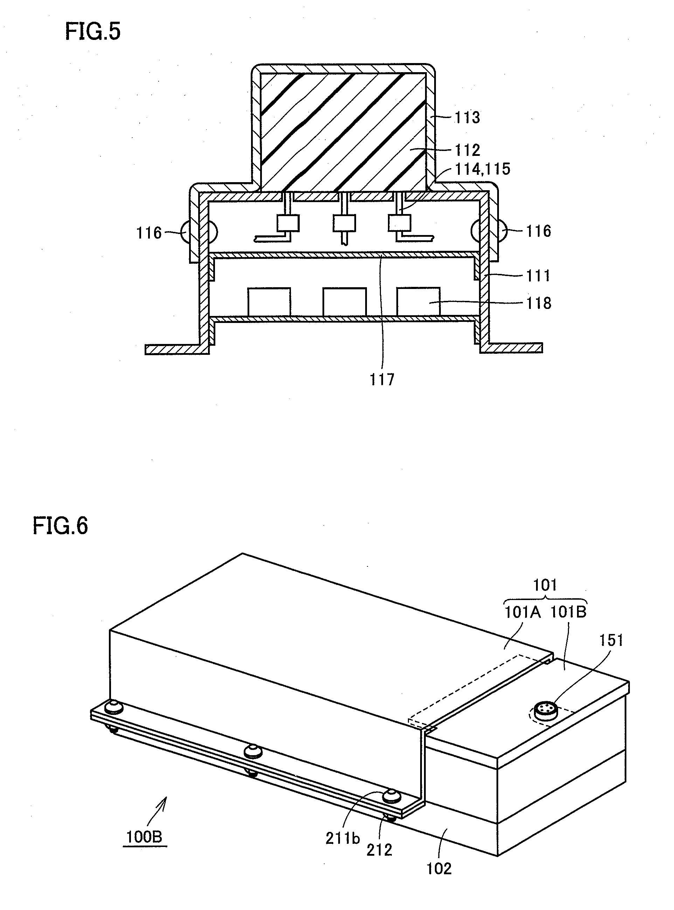

A battery pack and a motor vehicle incorporating this battery pack according to embodiments of the present invention will be hereinafter described with reference to Figs. 1-5. Fig. 1 is a schematic cross-sectional view showing the form of a motor vehicle incorporating a battery pack according to an embodiment of the present invention. Fig. 2 is a schematic plan perspective view of the motor vehicle shown in Fig. 1. Fig. 3 is a block diagram illustrating the control relating to the battery pack of the motor vehicle shown in Fig. 1. Fig. 4 is an overall exploded perspective view of the battery pack shown in Fig. 1. Fig. 5 is a schematic cross-sectional view along the line V-V in Fig. 4. The same or corresponding components with the background art in the drawings are designated by the same reference characters, and description thereof will not be repeated.

As shown in Figs. 1 and 2, a motor vehicle 1 has front seats 2a and 2b (shown in Fig. 2) and a rear seat 6 arranged within its boarding space 50. Within boarding space 50, a battery pack 100A according to the present embodiment is mounted on a boarding space floor surface 3 located below and between front seats 2a and 2b.

As shown in Fig. 3, a battery 9 including battery pack 100A is connected to an energy generating unit 8 including a generator installed in the engine (not shown) and the like of motor vehicle 1. In motor vehicle 1, electricity that is the energy generated in this energy generating unit 8 can be supplied to battery pack 100A. That is, a secondary battery capable of being charged and discharged is arranged in battery pack 100A constituting battery 9. The structure of battery pack 100A will be described in greater detail with reference to Figs. 4 and 5.

Battery 9 is used as an energy source which drives an operation apparatus 10 installed in the motor vehicle, such as an air-conditioner installed in motor vehicle 1. Operation apparatus 10 includes equipment such as the aforementioned air-conditioner, a car-navigation system incorporated in the vehicle or a computer system, excluding a drive device such as a motor used as a power source for driving the motor vehicle. However, operation apparatus 10 may also be a drive device such as a motor used as a power source which drives motor vehicle 1. That is, battery 9 may supply energy for the above-described drive device. Energy generating unit 8, battery 9 and operation apparatus 10 are connected to a control unit 7. This control unit 7 controls the charge and discharge of battery 9, the operation of energy generating unit 8, and the supplying state of energy to operation apparatus 10.

Referring to Figs. 4 and 5, the structure of battery pack 100A will now be described. In battery pack 100A according to the present embodiment, a battery module 203 formed of a group of a plurality of battery cells 203 a, and an auxiliary component 110 are accommodated in a battery case 101. A secondary battery capable of being charged and discharged repeatedly, such as a nicad battery (Ni-Cd battery), a nickel-hydride battery, a lithium-ion battery and the like, is used for battery cells 203 a. Battery case 101 includes a lower case 102 which supports battery module 203 and auxiliary component 110, a battery module cover 101A which covers battery module 203, and an auxiliary component cover 101B which covers auxiliary component 110.

Auxiliary component 110 includes a junction box 111, a main system relay 112 to which high voltage cables 114, 115 extending from battery module 203 are connected, and an electronic component 118. A specific example of electronic component 118 includes a battery ECU, a main-line fuse, and the like. The above-described electronic component 118 which is accommodated in junction box 111 as shown in Fig. 5 is fixed to junction box 111 in a detachable manner such that it can be replaced in the case of failure.

Main system relay 112 is located downstream of the flow of the coolant for temperature control flowing through battery pack 100A, and is placed on the outer surface of junction box 111. Furthermore, main system relay 112 is fixed to junction box 111 in an undetachable manner using a rivet 116 with a metal bracket 113 substantially surrounding main system relay 112. This is to improve the effect of cooling main system relay 112 and to prevent battery module 203 which is a secondary battery from being charged and discharged through connections of high voltage cables 114 and 115 to main system relay 112. Therefore, as shown in Fig. 5, it is preferable that the connection points of high voltage cables 114 and 115 to auxiliary component 110 are covered with a plate 117 such that the connection points are not exposed, and that high voltage cables 114 and 115 are integrally provided in auxiliary component 110 to obviate detachment from auxiliary component 110.

Furthermore, battery module cover 101A is fixed to lower case 102 using a security bolt (break-head bolt) 211 in an undetachable manner in order to prevent charge and discharge with respect to battery module 203 which is a secondary battery from/to an external source. In the case where battery module cover 101A is configured to be fixed to lower case 102 in an undetachable manner, other fixing measures such as a bolt, a rivet, welding and the like using a mechanism for preventing loosening can be employed without limitation to security bolt 211.

On the other hand, auxiliary component cover 101B is fixed to lower case 102 in a detachable manner in order to allow electronic component 118 within auxiliary component 110 to be replaced. In the present embodiment, fastening measures by an ordinary bolt 131 and a nut 141 are used.

According to battery pack 100A and motor vehicle 1 incorporating this battery pack 100A of the present embodiment, it is possible to remove only auxiliary component cover 101B and examine auxiliary component 110 when failure occurs in battery pack 100A. In the case where failure occurs only in auxiliary component 110 which can be readily serviced by replacing the component, it is possible to service only auxiliary component 110 economically, readily and immediately, and to continue using battery module 203. In the case where failure occurs in battery module 203, entire battery pack 100A should be replaced. Thus, appropriate measures can be taken depending on the state of the failure in battery pack 100A.

In the above-described embodiment, auxiliary component cover 101B is fixed to lower case 102 using the fastening means of ordinary bolt 131 and nut 141, and therefore, the third person can easily open auxiliary component cover 101B. It is to be noted that auxiliary component cover 101B is required to be opened often at a specific place such as a motor vehicle maintenance facility. Therefore, auxiliary component cover 101B can be configured to be opened and closed only in the case where the special tool is used, and not easily opened by the third person.

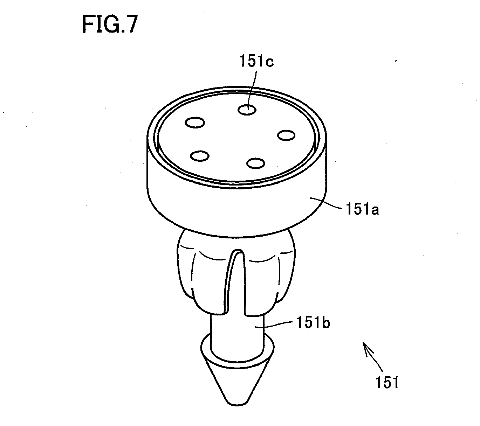

Figs. 6 and 7 show an example in which auxiliary component cover 101B can be opened and closed by the special tool. Auxiliary component cover 101B is fixed by using an interlock clip 151 as shown in Fig. 7, which can be removed only by a service plug (not shown) previously provided at a specific place such as a motor vehicle maintenance facility. Interlock clip 151 has a cylindrical head 151 a and a clip portion 151b, and can be applied by engaging the service plug in a concave lock hole 151c provided in head 151a.

The above embodiments disclosed herein are by way of example only, and are not to be taken by way of limitation in all aspects. Therefore, the technical scope of the present invention is defined, not by the description set forth above, but by the appended claims, and all changes that fall within limits and bounds of the claims, or equivalence thereof are intended to be embraced by the claims.

## Claims

1. A battery pack accommodating a battery module (203) formed of a group of a plurality of battery cells (203a) and an auxiliary component (110) in a battery case (101), wherein
said battery case (101) comprises a lower case (102) supporting said battery module (203) and said auxiliary component (110), a battery module cover (101A) covering said battery module (203), and an auxiliary component cover (101B) covering said auxiliary component (110),
said battery module cover (101 A) is fixed to said lower case (102) in an undetachable manner, and
said auxiliary component cover (101B) is fixed to said lower case (102) in a detachable manner.

2. The battery pack according to claim 1, wherein
said auxiliary component (110) includes a junction box (111), a main system relay (112) having high voltage cables (114, 115) from said battery module (203) connected, and an electronic component (118),
said main system relay (112) is fixed to said junction box (111) in an undetachable manner, and
said electronic component (118) is fixed to said junction box (111) in a detachable manner.

3. The battery pack according to claim 2, wherein
said main system relay (112) is placed on an outer surface of said junction box (111) and is fixed to said junction box (111) in an undetachable manner with a bracket (113) substantially surrounding said main system relay (112).

4. The battery pack according to claim 2, wherein
said high voltage cables (114, 115) are integrally provided with said auxiliary component (110) such that connection points of said high voltage cables (114, 115) to said auxiliary component (110) are not exposed.

5. The battery pack according to claim 1, wherein
said battery cells (203 a) include a lithium-ion battery.

6. A motor vehicle incorporating a battery pack accommodating a battery module (203) formed of a group of a plurality of battery cells (203a) and an auxiliary component (110) in a battery case (101), wherein
said battery case (101) comprises a lower case (102) supporting said battery module (203) and said auxiliary component (110), a battery module cover (101A) covering said battery module (203), and an auxiliary component cover (101B) covering said auxiliary component (110),
said battery module cover (101A) is fixed to said lower case (102) in an undetachable manner, and
said auxiliary component cover (101B) is fixed to said lower case (102) in a detachable manner.
